Europäisches Patentamt

European Patent Office

Office européen des brevets

(11) Veröffentlichungsnummer: **0 350 651**
**A2**

## (12) EUROPÄISCHE PATENTANMELDUNG

(21) Anmeldenummer: 89110969.6

(22) Anmeldetag: 16.06.89

(51) Int. Cl.⁴: **C08J 5/12 , C09J 5/06 , B29C 65/00**

(30) Priorität: 14.07.88 DE 3823817

(43) Veröffentlichungstag der Anmeldung:
17.01.90 Patentblatt 90/03

(84) Benannte Vertragsstaaten:
**AT BE CH ES FR GB GR IT LI LU NL SE**

(71) Anmelder: **REHAU AG + Co**
**Rheniumhaus**
**D-8673 Rehau(DE)**

(72) Erfinder: **Hopperdietzel, Siegfried, Dr.**
**Friedrichstrasse 18**
**D-8672 Selb(DE)**

(54) **Verfahren zum Verbinden von Formkörpern.**

(57) Die Erfindung betrifft ein Verfahren zum Verbinden von Formkörpern, Profilen und dergleichen aus vernetzten, teilvernetzten bzw. ultrahochmolekularen polymeren Materialien. Dabei werden die Fügeflächen der Formkörper/Profile durch Wärmezuführung von außen bis zum Schmelzpunkt der kristallinen Polymerbestandteile erhitzt. Unmittelbar danach wird auf die aufgeschmolzenen Fügeflächen eine mit dem Basispolymeren verträgliche Polymerbeschichtung aufgebracht. Danach werden die beschichteten Fügeflächen der Formkörper/Profile durch Wärmezuführung von außen aufgeschmolzen und unter Anwendung von Pressdruck miteinander verschweißt.

EP 0 350 651 A2

## Verfahren zum Verbinden von Formkörpern

Die Erfindung betrifft ein Verfahren zum Verbinden von Formkörpern, Profilen und dergleichen aus vernetzten, teilvernetzten bzw. ultrahochmolekularen polymeren Materialien.

Verbindungen von Formkörpern, Profilen und dergleichen aus vernetzten oder ultrahochmolekularen Materialien erfolgen nach dem Stand der Technik über Fittinge aus artfremden Materialien. So ist aus der DE-OS 21 49 136 ein Fitting mit einer rohrförmigen Einstecktülle und einem der Einstecktülle überlagerten Spannring bekannt geworden, wobei dieser Spannring axial gegenüber der Einstecktülle verstellbar ist. Die Einstecktülle weist dabei einen gegen ihr freies Ende zunehmenden Durchmesser und der Spannring eine konische Innenbohrung auf, welche gegen das freie Ende der Einstecktülle erweitert ist. Bei dem Rohrverbinder des Standes der Technik ist der Unterschied zwischen dem kleinsten Radius der konischen Innenbohrung des Spannringes und dem größten Radius der Einstecktülle kleiner als die Wanddicke des zu verbindenden Rohres ausgeführt. Das Rohr wird auf die Einstecktülle aufgeschoben und daraufhin durch axiales Verschieben des Spannringes auf der Einstecktülle festgespannt.

Der bekannte Klemmverbinder hat den Nachteil, daß sich beim Betrieb die konische Klemmhülse vom Rohr lösen kann, wodurch die Klemmverbindung undicht wird. Bei einem Rohr aus vernetztem Polyethylen erklärt sich dieser Vorgang so, daß das im Bereich der Klemmverbindung eingespannte vernetzte Polyethylen das Bestreben hat, sich zu dehnen. Daran wird das Rohr durch die aufgespannte konische Klemmhülse gehindert. Bei Wechseltemperaturbeanspruchungen jedoch, z.B. bei der Abkühlung nach der Durchleitung von warmen Fluiden, schrumpft der Bereich des eingeklemmten Polyethylenrohres entsprechend der Temperaturdifferenz zurück.

Dadurch kann es zu einer Spaltbildung zwischen der Klemmhülse und dem Rohr aus vernetztem Polyethylen kommen. Bei der nächsten Druckbeaufschlagung kann es dann zum Herausschieben des vernetzten Polyethylenrohres aus dem Klemmverbinder kommen.

Durch die DE-PS 36 08 843 ist ein Verfahren zur Herstellung einer Klemmverbindung für Rohre aus vernetzten polymeren Werkstoffen bekannt geworden, wobei ein als zylindrische Rohrhülse ausgebildetes Verbindungsstück mit seinem am Aussenumfang gerippten Steckbereich in das Rohrende eingesetzt und danach eine axial zur Rohrachse bewegliche zylindrische Schiebehülse unter Herstellung der Klemmverbindung über das Rohrende mit dem eingesetzten Steckbereich aufgepreßt wird. Wesentliches Merkmal dieser bekannten Klemmverbindung ist, daß das Rohrende vor dem Einsetzen des Steckbereiches auf diesen äußeren Umfang aufgeweitet wird. Beim Aufpressen der Schiebehülse wird das Material des Rohrendes partiell in die Nuten des Steckbereichs des Verbindungsstückes eingepreßt, wodurch die unlösbare feste Verbindung geschaffen wird.

Aus der CH-PS 665 386 ist ein Verfahren zum Verbinden zweier Kunststoffkörper bekannt, bei dem eine Muffe aus einem mit dem Kunststoff der Körper chemisch verschweißbaren Material über die Verbindungsstelle geschoben wird. In die Muffe ist ein Vernetzungsmittel eingearbeitet und die beiden Körper werden mit sich und der Muffe durch eine chemische Verschweißung verbunden. Wesentlich dabei ist, daß durch eine gemeinsame Vernetzung von Muffe und Kunststoffkörper durch chemisches Verschweißen der Makromoleküle ein übergreifendes Netzwerk gebildet wird.

Der Nachteil dieser bekannten Verbindungsart wird darin gesehen, daß neben den zu verbindenden Kunststoffkörpern ein weiteres Formteil, nämlich die Muffe mit dem eingearbeiteten Vernetzungsmittel benötigt wird. Der Aufwand zur Herstellung der bekannten Verbindung ist damit erheblich, was sich auch auf die Kosten einer solchen Verbindung niederschlägt.

Hier setzt die Erfindung ein, die es sich zur Aufgabe gestellt hat, ein Verfahren zum Verbinden von Formkörpern oder Profilen aus vernetzten, teilvernetzten oder ultrahochmolekularen Materialien anzugeben, welches ohne zusätzliche Fittinge bzw. weitere Formteile zu einer festen, dichten Verbindung führt. Erfindungsgemäß wird dazu vorgeschlagen, daß die Fügeflächen der Formkörper bzw. Profile durch Wärmezuführung von außen bis zum Schmelzpunkt der kristallinen Polymerbestandteile erhitzt werden, daß unmittelbar danach auf die aufgeschmolzenen Fügeflächen eine mit dem Basispolymeren verträgliche Polymerbeschichtung aufgebracht wird, und daß danach die beschichteten Fügeflächen der Formkörper oder Profile durch Wärmezuführung von außen aufgeschmolzen und unter Anwendung von Preßdruck miteinander verschweißt werden.

Wesentlich bei der Durchführung des erfindungsgemäßen Verfahrens ist die Tatsache, daß bei vernetzten Formkörpern unter Profilen eine 100%ige Vernetzung nicht erzielbar ist. Der Vernetzungsgrad wird sich - je nach Einsatzzweck - vorteilhaft in Bereichen zwischen 50 und 90% halten. Im Bedarfsfall können auch geringere Vernetzungsgrade ausreichen, wobei dann von teilvernetzen Formkörpern gesprochen wird.

An den Fügeflächen der zu verbindenden Formkörper oder Profilen befinden sich damit oberflächlich vernetzte Polymerketten, die von nicht vernetzten kristallinen Bestandteilen des Basispolymeren umgeben sind.

Die Erfindung macht sich die Erkenntnis zunutze, daß diese nicht vernetzten kristallinen Bestandteile des Basispolymeren trotz des erzielten Vernetzungsgrades schmelzbare Bestandteile des Polymeren bleiben. Diese schmelzbaren Bestandteile des Polymeren können durch Wärmezuführung von außen aufgeschmolzen werden. Bei ausreichender Wärmezuführung kann auf diese Weise ein aufgeschmolzener Bezug über der gesamten Fügefläche erzielt werden. Diese Erkenntnis führt zu dem erfinderischen Ausgangsschritt daß zwei derart aufgeschmolzene Fügeflächen unmittelbar unter Anwendung von Preßdruck zusammengefügt und damit verschweißt werden können.

Ausgehend von dieser Tatsache haben experimentelle Überprüfungen ergeben, daß auf diese Weise zwar ein Zusammenfügen von Formkörpern bzw. Profilen möglich ist, daß die Fügekräfte jedoch in mancher Beziehung nicht ausreichen. Die Erfindung besagt daher weiter, daß auf die durch Wärmezuführung von außen aufgeschmolzenen Fügeflächen der Formkörper oder Profile zusätzlich eine mit dem Basispolymeren verträgliche Polymerbeschichtung aufgebracht wird. Diese Beschichtung, die als Mittlerschicht bzw.Verschweißhilfe zwischen den zu verbindenden Formkörpern bzw. Profilen anzusehen ist, kann im Anschluß an das Auftragen auf der Fügefläche erkalten. Die zu verbindenden Formkörper bzw. Profile können danach im beliebigen Zeitraum durch einfaches Aufschmelzen der Beschichtung an den Fügeflächen und anschließendes Zusammenpressen fest miteinander verschweißt werden.

Die Beschichtung ist dabei gegenüber der Fügefläche des einzelnen Formkörpers oder Profils mit den vorher aufgeschmolzenen kristallinen Polymerbestandteilen eine innige Verbindung eingegangen. Man kann hier von einer echten Schweißverbindung zwischen den kristallinen Polymerbestandteilen der Fügefläche und der Beschichtung sprechen. Der weitere Verbindungsschritt ist dann eine einfache Verschweißung der Beschichtung durch Applikation von Wärme und Preßdruck.

Die Polymerbeschichtung der aufgeschmolzenen Fügeflächen kann durch Eintauchen in schmelzbares Polymermaterial erfolgen. Hierbei kann es sich um ein Polymerpulver handeln, welches an den aufgeschmolzenen Fügeflächen anhaftet und bereits zum Teil durch die Schmelzwärme eine Schmelzverbindung mit der Fügefläche eingeht. Das anhaftende Polymerpulver kann in einem weiteren Verfahrensschritt vorteilhaft im Anschluß an das Aufbringen einer flächigen Verpressung auf den Fügeflächen unterzogen werden. Diese flächige Verpressung kann ebenfalls unter Anwendung von Wärme und Druck erfolgen, so daß die vorgeschilderte Verschweißung der Beschichtung mit der Fügefläche in vollem Umfang erfolgen kann. Diese Nachbehandlung bringt als Ergebnis eine durchgehend flächige Polymerbeschichtung auf der Fügefläche, die sich über den nachfolgenden Schweißvorgang mit der gleichermaßen beschichteten Fügefläche eines Gegenformteiles oder Profils innig verschweißen läßt.

Neben dem Eintauchen der Fügeflächen in schmelzbares Polymermaterial wie Polymerpulver und dergleichen kann die Polymerbeschichtung auf die Fügeflächen auch in Form einer diese abdeckenden Folie aus polymerem Material erfolgen. In diesem Fall wird die Fügefläche durch Aufschmelzen der kristallinen Polymerbestandteile haftfähig gemacht und unmittelbar danach die Folie durch Preßdruck aufgebracht. Die aufgeschmolzene Fügefläche bewirkt mit ihrer Schmelzwärme ein Anschmelzen der angepreßten Folienoberfläche, wodurch ein Verschweißen der Folienoberfläche mit der Fügefläche erfolgt. Danach können derart vorbehandelte Fügeflächen von Gegenformteilen oder Profilen in der geschilderten Weise miteinander verschweißt werden.

Das erfindungsgemäße Verfahren erfaßt darüber hinaus die Möglichkeit, die Polymerbeschichtung auf die Fügeflächen der Formkörper bzw. Profile aufzubringen, ohne daß diese Fügeflächen vorher durch Aufschmelzen der kristallinen Polymerbestandteile schweißfähig gemacht worden sind.

Hier wird beispielsweise die Pulverbeschichtung eines mit dem Basispolymeren der Formkörper oder Profile verträglichen Polymeren durch elektrostatische Adhesion der Pulverpartikel durchgeführt. Auf diese Weise läßt sich eine Pulverbeschichtung entsprechender Dicke auf die Fügeflächen der Formkörper oder Profile auftragen. In einem nachfolgenden Aufschmelzschritt durch Zuführung von Wärme kann dann diese Pulverschicht aufgeschmolzen und durch Fortführung der Wärmeapplikation auch die Oberfläche der Fügeflächen zum Schmelzen gebracht werden. Auf diese Weise läßt sich die fest an der Fügefläche haftende Beschichtung mit einem einzigen Aufschmelzvorgang erzielen. Neben der adhesiven Pulverbeschichtung kann auf diese Weise auch eine Folie als Polymerbeschichtung mit der Fügefläche der Formkörper oder Profile schweißverbunden werden.

Die Erfindung wird in den nachstehend angegebenen Beispielen verdeutlicht:

Beispiel 1:

Zwei Rohre aus mit Peroxiden vernetztem hochmolekularen Polyethylen mit einem Vernetzungsgrad von ca. 85 % wurden nach dem erfindungsgemäßen Verfahren an ihren Stirnflächen miteinander verbunden. Der Außendurchmesser beider Rohrstücke betrug 17 mm die Wanddicke lag bei 2,0 mm. Als Verbindungsmittel wurde ein Polyethylen-Pulver der Dichte 0,94 $g/cm^2$, MFI 1,9 verwendet.

Die Korngröße des Polyethylen-Pulvers lag zwischen 0,1 und 0,75 mm. Die Vorbehandlung der zu verbindenden Stirnflächen der beiden Rohrstücke erfolgte gemäß patentansprüchen 1, 2, 3 und 5. Die Dicke der Beschichtung der Fügeflächen lag bei 0,3 mm.

Nach dem Abkühlen der Fügeflächen wurden diese an einem handelsüblichen Heizspiegelgerät aufgeschmolzen und durch Anwendung des entsprechenden Pressdruckes miteinander verschweißt. Die Temperatur am Schweißspiegel betrug dabei 250° C, der Schweißvorgang war in ca. 20 sec. abgeschlossen.

An der Verbindungsstelle wurden Prüfstreifen entnommen und die Zugfestigkeit der Verbindung nach DIN 53 455 zu 19,5 MPa bestimmt. Dieser Wert liegt in vergleichbarer Größe zum Wert der Zugfestigkeit der Rohrwand bei den Versuchsrohrstücken.

An auf gleiche Weise verschweißten Rohrstücken durchgeführte Berstdruckprüfungen ergaben sich vergleichbare Werte wie bei Rohren aus vernetztem Polyethylen ohne entsprechende Schweißverbindung. So ergab sich bei 20° C ein Berstdruck von 86 bar und bei 95° C ein solcher von 28 bar.

Beispiel 2:

Normstäbe der Abmessungen 4 x 6 x 50 mm aus silanvernetztem Polyethylen hoher Dichte mit einem Vernetzungsgrad von 58 % wurden nach dem in Beispiel 1 beschriebenen Verfahren an ihren Stirnflächen miteinander verschweißt.

Dabei wurde an der Verbindungsstelle eine Zugfestigkeit von 21 MPa erreicht. Die Zugfestigkeit des unverschweißten Normstabes betrug 23,5 MPa.

Die gleichen Werte wurden erreicht bei der Verwendung einer Folie aus Polyethylen hoher Dichte, die nach dem erfindungsgemäßen Verfahren gemäß Ansprüchen 1, 2 und 4 auf die Fügeflächen aufgebracht und danach der Schweißvorgang durchgeführt wurde.

Beispiel 3:

Die Fügeflächen von Formteilen aus strahlenvernetztem Polyethylen niedriger Dichte wurden nach dem Verfahren gemäß Beispiel 1 miteinander verschweißt. Der Vernetzungsgrad der Formteile betrug 65 %.

Die Zugfestigkeit des Verbindungsbereiches wurde mit 17,4 MPa gemessen, die der Formteile selbst lag bei 19,2 MPa.

Beispiel 4:

Nach dem gleichen Verfahren wurden Normstäbe aus ultrahochmolekularem Material mit einer Molmasse von ca. $5 \times 10^6$ g/Mol miteinander verschweißt. Auch hier zeigte der Verbindungsbereich eine ähnliche hohe Festigkeit wie der Normstab selbst.

## Ansprüche

1. Verfahren zum Verbinden von Formkörpern, Profilen und dergleichen aus vernetzten, teilvernetzten bzw. ultrahochmolekularen polymeren Materialien, dadurch gekennzeichnet, daß die Fügeflächen der Formkörper/Profile durch Wärmezuführung von außen bis zum Schmelzpunkt der kristallinen Polymerbestandteile erhitzt werden, daß unmittelbar danach auf die aufgeschmolzenen Fügeflächen eine mit dem Basispolymeren verträgliche polymerbeschichtung aufgebracht wird, und daß danach die beschichteten Fügeflächen der Formkörper/Profile durch Wärmezuführung von außen aufgeschmolzen und unter Anwendung von Preßdruck miteinander verschweißt werden.

2. Verfahren zum Verbinden von Formkörpern, Profilen und dergleichen aus vernetzten, teilvernetzten oder ultrahochmolekularen Materialien, dadurch gekennzeichnet, daß auf die Fügeflächen der Formkörper/Profile eine mit dem Basispolymeren verträgliche Polymerbeschichtung aufgebracht wird, daß dann die Beschichtung durch Wärmezuführung aufgeschmolzen und die Wärmezuführung bis zur Erreichung des Schmelzpunktes der kristallinen Polymerbestandteile in der Fügefläche fortgesetzt und durch Anwendung von Preßdruck die Beschichtung mit der Fügefläche verschweißt wird, und daß danach die beschichteten Fügeflächen der Formkörper/Profile durch Wärmezuführung von außen aufgeschmolzen und unter Anwendung von Preßdruck miteinander verschweißt werden.

3. Verfahren nach Ansprüchen 1 und 2, dadurch gekennzeichnet, daß die Polymerbeschichtung durch Eintauchen der Fügeflächen in schmelzbares Polymermaterial erfolgt.

4. Verfahren nach Ansprüchen 1 und 2, dadurch gekennzeichnet, daß die Polymerbeschichtung mittels einer die Fügeflächen abdeckenden Folie aus polymerem Material erfolgt.

5. Verfahren nach Anspruch 1, dadurch gekennzeichnet, daß die Polymerbeschichtung im Anschluß an das Aufbringen einer flächigen Verpressung auf den Fügeflächen unterzogen wird.